(19) Europäisches Patentamt
European Patent Office
Office européen des brevets

(11) **EP 1 779 505 B1**

(12) **FASCICULE DE BREVET EUROPEEN**

(45) Date de publication et mention
de la délivrance du brevet:
**23.11.2016 Bulletin 2016/47**

(21) Numéro de dépôt: **05791096.0**

(22) Date de dépôt: **18.07.2005**

(51) Int Cl.:
*H02P 1/02* *(2006.01)*      *H02K 11/04* *(2006.01)*
*H02P 9/08* *(2006.01)*

(86) Numéro de dépôt international:
**PCT/FR2005/001829**

(87) Numéro de publication internationale:
**WO 2006/024730 (09.03.2006 Gazette 2006/10)**

(54) **DISPOSITIF DE CONTROLE ET DE PUISSANCE POUR UNE MACHINE ELECTRIQUE TOURNANTE**

STEUER- UND STROMVERSORGUNGSEINRICHTUNG FÜR EINE ROTIERENDE ELEKTRISCHE MASCHINE

CONTROL AND POWER DEVICE FOR A ROTATING ELECTRICAL MACHINE

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **29.07.2004 FR 0408418**

(43) Date de publication de la demande:
**02.05.2007 Bulletin 2007/18**

(73) Titulaire: **VALEO EQUIPEMENTS ELECTRIQUES MOTEUR**
**94017 Créteil-Cedex (FR)**

(72) Inventeurs:
• **PIERRET, Jean-Marie**
**F-75012 Paris (FR)**
• **PICHON, Francis**
**F-95610 Eragny sur Oise (FR)**

(74) Mandataire: **de Lambilly Delorme, Marie Pierre**
**Valéo Equipements Electriques Moteur**
**Propriété Industrielle**
**2, rue André-Boulle**
**94046 Créteil Cedex (FR)**

(56) Documents cités:
**EP-A- 0 660 501     EP-A- 0 751 601**
**FR-A- 2 842 041**

## Description

### *Domaine de l'invention*

L'invention concerne un dispositif de contrôle et de puissance pour une machine électrique tournante comportant un circuit de contrôle et un circuit de puissance, ledit circuit de puissance comportant une pluralité de transistors de puissance et des circuits de pilotage associés auxdits transistors. L'invention trouve des applications dans le domaine de l'industrie automobile et, en particulier, dans le domaine des alternateurs et alternateurs-démarreurs.

### *Etat de la technique*

Dans un véhicule automobile comportant un moteur thermique et un alternateur inclus dans un boîtier, ledit alternateur comporte :

- un rotor représentant un inducteur associé classiquement à deux bagues collectrices et deux balais par lesquels est amené un courant d'excitation ;
- un stator polyphasé portant plusieurs bobines ou enroulements, représentant un induit, qui sont connectés en étoile ou en triangle dans le cas le plus fréquent d'une structure triphasée et qui délivrent vers un pont redresseur, en fonctionnement alternateur, une puissance électrique.

Le stator entoure le rotor, dont les balais sont reliés à un régulateur de l'alternateur pour maintenir la tension de l'alternateur à une tension voulue entre 12 et 14V pour une batterie selon qu'elle est à vide ou chargée respectivement.

L'alternateur permet de transformer un mouvement de rotation du rotor inducteur, entraîné par le moteur thermique du véhicule, en un courant électrique induit dans les bobinages du stator.

L'alternateur peut aussi être réversible et former un moteur électrique, permettant d'entraîner en rotation, via l'arbre de rotor, le moteur thermique du véhicule. Cet alternateur réversible est appelé alternateur-démarreur ou encore alterno-démarreur. Il permet de transformer l'énergie mécanique en énergie électrique et vice versa.

Ainsi, en mode alternateur, l'alterno-démarreur charge notamment la batterie du véhicule tandis qu'en en mode démarreur l'alterno-démarreur entraîne le moteur thermique appelé également moteur à combustion interne, du véhicule automobile pour son démarrage.

Il est prévu une unité de puissance connectée sur les phases du stator et montée entre la masse et une borne d'alimentation d'une batterie. Ladite unité fait office de pont de commande ou onduleur de ces phases lorsque l'alterno-démarreur fonctionne en mode démarreur et fait office de pont redresseur lorsqu'il fonctionne en mode alternateur. Elle comporte, par exemple, des diodes associées à des transistors de type MOSFET bien connu de l'homme du métier et est pilotée par une unité de contrôle.

Actuellement, il est classique de réaliser une unité de puissance dans laquelle les transistors de puissance forment un pont d'interrupteurs et sont commandés en synchronisme avec le courant présent dans un enroulement du stator, on parle de redressement synchrone.

Il est ainsi nécessaire de piloter les transistors au moyen d'une unité de contrôle relativement sophistiquée comme, par exemple, un microcontrôleur, des sondes de courant détectant le sens du courant dans les bobinages de l'induit de l'alternateur etc.

Dans un premier mode de réalisation connu, l'unité de puissance, comprenant le pont redresseur et l'unité de contrôle forme un module électronique de contrôle et de puissance implanté le plus souvent à l'extérieur de l'alterno-démarreur auquel il est relié par des fils électriques connectés aux bornes de sortie des phases du stator.

Dans un deuxième mode de réalisation décrit dans le brevet européen EP-A1-0911958, il est prévu de placer le module électronique de contrôle et de puissance directement dans le boîtier de l'alterno-démarreur ce qui supprime les fils électriques précités et évite ainsi des problèmes de montage sur véhicule. A cet effet, ledit module de contrôle et de puissance est miniaturisé.

Cependant, en raison des contraintes de miniaturisation de plus en plus importantes et des contraintes constructeurs notamment au niveau des dimensions dudit boîtier à respecter, il y a un problème d'encombrement du module électronique de contrôle et de puissance dus aux nombreux composants nécessaires dans ledit module et aux interconnexions reliant les divers composants.

Par ailleurs, il est connu par FR-A-2842041 un dispositif de contrôle et de puissance pour une machine électrique tournante comportant un circuit de gestion, un circuit de puissance, le circuit de puissance comportant une pluralité de transistors de puissance, et des circuits de pilotage associés aux transistors de puissance. Ce dispositif de contrôle et de puissance comporte également des moyens de connexion entre le circuit de gestion et les circuits de pilotage destinés à assurer une mise sous tension des circuits de pilotage et à transmettre un potentiel transitant entre le circuit de gestion et les circuits de pilotage.

### *Exposé de l'invention*

L'invention concerne un dispositif de contrôle et de puissance tel que définie dans la revendication 1 ci-annexée.

L'invention présente l'avantage de détecter si des moyens de connexion sont défectueux et de permettre au circuit de gestion d'appliquer une stratégie déterminée suite à une rupture.

Dans un mode de réalisation préférentiel non limitatif, au moins potentiel est une tension d'alimentation destinée à alimenter lesdits transistors.

Dans un mode de réalisation préférentiel non limitatif, un circuit de pilotage comporte des moyens propres de déclenchement de la mise sous tension.

Dans un mode de réalisation préférentiel non limitatif, lesdits moyens de déclenchement de mise sous tension sont destinés à effectuer un déclenchement en fonction dudit potentiel. Ainsi, on active les circuits de pilotage par le potentiel qui sert à alimenter les grilles des transistors. Plus précisément, ce potentiel permet de réveiller les alimentations des circuits de pilotage.

Dans un mode de réalisation préférentiel non limitatif, les moyens de déclenchement de mise sous tension comportent un comparateur destiné à comparer ledit au moins potentiel par rapport à une première tension de référence.

Dans un mode de réalisation préférentiel non limitatif, le comparateur comporte une hystérésis pour déterminer la première tension de référence. Cette hystérésis présente l'avantage de stabiliser la comparaison qui est effectuée.

Dans un mode de réalisation préférentiel non limitatif, le comparateur, selon le résultat de ladite comparaison avec la première tension de référence, est destiné à envoyer un signal de déblocage de manière à amorcer ledit circuit de pilotage.

Dans un mode de réalisation préférentiel non limitatif, les moyens de déclenchement de mise sous tension comporte en outre une source de courant destinée à recevoir ledit signal de déblocage et à envoyer un signal d'activation audit circuit de pilotage de manière l'amorcer.

*Brève description des Figures*

La Fig.1 est une représentation schématique d'un dispositif de contrôle et de puissance selon l'invention,

La Fig.2 représente des signaux transmis entre un circuit de gestion, un circuit de puissance et des circuits de pilotage du dispositif de contrôle et de puissance selon la Fig.1,

La Fig.3 représente un mode de réalisation d'un système d'alimentation applicable au dispositif de contrôle et de puissance de la Fig.1,

La Fig.4 est une représentation schématique d'un mode de réalisation de moyens de déclenchement de mise sous tension et de moyens de détection de rupture de liaison compris dans le dispositif de contrôle et de puissance de la Fig.1,

La Fig.5 est un graphique montrant une hystérésis appliquée par les moyens de déclenchement de mise sous tension de la Fig.4.

La Fig.6 est un mode de réalisation préférentiel des moyens de déclenchement de mise sous tension de la Fig.4,

La Fig.7 représente un mode de réalisation d'alimentations d'un circuit de pilotage destinées à être activées par les moyens de déclenchement de mise sous tension de la Fig.4,

La Fig.8 est un mode de réalisation préférentiel des moyens de détection de rupture de liaison de la Fig.4.

***Description détaillée de modes de réalisation de l'invention.***

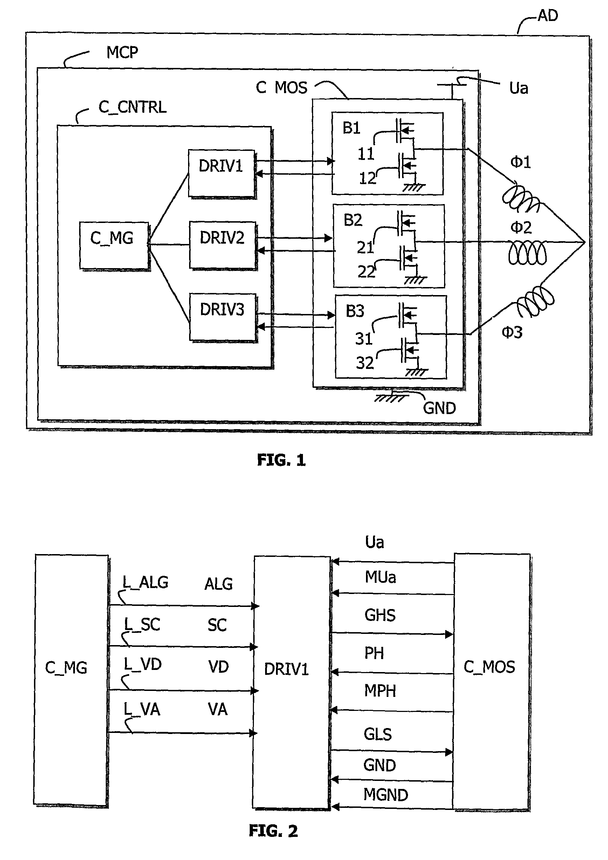

La Fig.1 représente un module ou dispositif de contrôle et de puissance MCP selon l'invention d'un alterno-démarreur AD d'un véhicule.

Le module de contrôle et de puissance MCP comporte :

- une unité ou circuit de puissance C_POS comprenant un pont redresseur, ledit pont comportant trois branches B1, B2, B3 identiques,
- une unité de contrôle C_CNTRL comprenant des circuits de pilotage DRIV1, DRIV1, DRIV3 appelés également drivers DRIV, et un circuit de gestion C_MG.

L'alterno-démarreur AD est, dans l'exemple pris, triphasé et comporte trois phases φ1, φ2 et φ3 connectée chacune à une des branches respectives B1, B2 et B3, de l'unité de puissance C_POS. Les trois branches B1, B2 et B3 étant identiques, seule la première branche B1 sera décrite dans la suite de la description.

La première branche B1 du pont redresseur comporte deux interrupteurs 11 et 12 qui sont des transistors de puissance. Le premier transistor 11 est appelé transistor haut ou en anglais « high side ». Il est connecté entre la première phase φ1 de l'alterno-démarreur et une alimentation Ua du réseau de bord du véhicule. Le deuxième transistor 12 est appelé transistor bas ou en anglais « low side ». Il est connecté entre la première phase φ1 de l'alterno-démarreur et une ligne de masse GND.

Le premier driver DRIV1 de l'unité de contrôle C_CNTRL est connecté, en sortie, aux grilles des deux transistors 11 et 12. Il permet ainsi de piloter lesdits transistors 11 et 12 de la première branche B1. A cet effet, il compare les potentiels de la première phase <p1 de l'alterno-démarreur avec le potentiel de masse GND du pont redresseur pour la commande du transistor 12 et avec le potentiel de sortie Ua du pont redresseur pour la commande du transistor 11.

Par ailleurs, ledit premier driver DRIV1 est également connecté, en entrée, au circuit de gestion C_MG.

Chaque driver DRIV1, DRIV2 et DRIV3 est contrôlé par le même circuit de gestion C_MG.

A cet effet, chaque driver DRIV reçoit en entrée différents signaux provenant du circuit de gestion C_MG. Ces signaux sont représentés sur la Fig.2 et sont les suivants.

- une alimentation ALG, de type survoltage appelée en anglais « boost », qui est une tension d'alimentation permettant d'alimenter les grilles des transistors 11 et 12,
- des signaux capteurs SC qui sont des informations fournies par des capteurs de position du rotor de l'alterno-démarreur pour indiquer la position du rotor de l'alterno-démarreur lorsque l'on est en mode démarreur,
- une information de validation VD du mode démarreur, et
- une information de validation VA du mode alternateur.

Ces deux derniers signaux permettent à un driver DRIV de savoir si l'alterno-démarreur doit travailler, à un instant précis, comme un alternateur ou comme un démarreur.

On notera que pour fournir ces signaux, le dispositif de contrôle et de puissance MCP comporte un nombre de fils de connexion correspondants appelées entrées ou liaisons L_ALG, L_SC, L_VD, L_VA reliés entre le circuit de gestion C_MG et un driver DRIV.

Par ailleurs, chaque driver DRIV reçoit des premiers signaux de l'unité de puissance C_POS et transmet des deuxièmes signaux à ladite unité de puissance C_POS, notamment aux transistors 11 et 12 du pont redresseur dans le cas du premier driver DRIV1. Ces signaux reçus et transmis sont représentés sur la Fig. 2 et sont les suivants.

Les premiers signaux reçus :

- Un potentiel d'alimentation Ua de l'alterno-démarreur, à savoir le potentiel de l'alimentation du réseau de bord équivalent à la tension batterie du véhicule correspondant généralement une tension d'environ 14V en charge et d'environ 13,5V à vide,
- Une information de mesure MUa du potentiel de cette ligne Ua,
- Une entrée de phase PH provenant de l'alterno-démarreur,
- Une information de mesure MPH du potentiel de l'entrée de phase PH,
- Un potentiel de la masse GND, et
- Une information de mesure MGND du potentiel de la masse.

On notera que les informations de mesure MUa, MPH et MGND sont des mesures directes aux bornes d'un transistor ou d'une phase de l'alternateur.

Les deuxièmes signaux transmis :

- Un signal de commande GHS de la grille du premier transistor de puissance 11,
- Un signal de commande GLS de la grille du transistor de puissance 12.

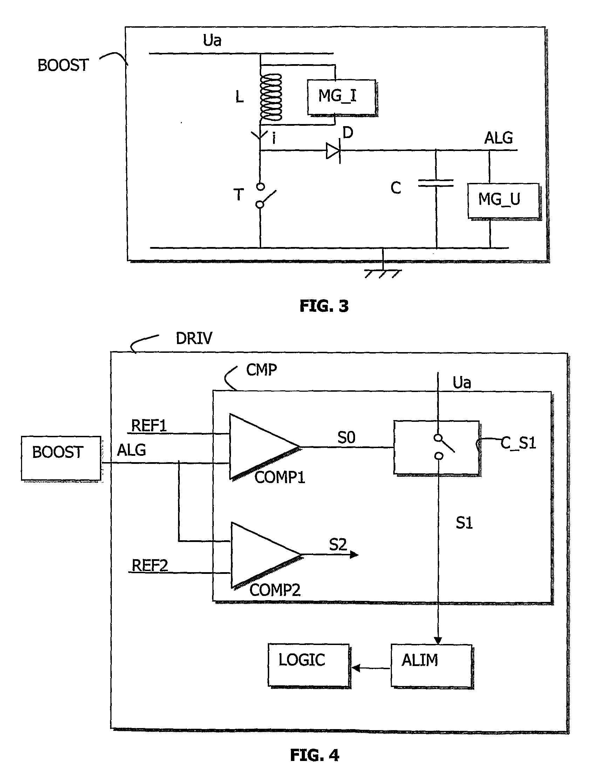

On notera que la tension d'alimentation ALG est fournie par un système d'alimentation BOOST. Un exemple de système d'alimentation BOOST fournissant une telle alimentation ALG est représenté à la Fig. 3.

Ledit système BOOST comprend :

- une inductance L de valeur $100\mu H$,
- une diode D comprenant une tension de jonction Vd d'environ 0,6V,
- une capacité C de valeur de 2 à $10\mu F$, et
- un transistor T de type MOS comportant une tension de déchet Vdson faible d'environ 0,2V.

Par ailleurs, le système d'alimentation BOOST comporte un premier potentiel Ua qui correspond à la tension batterie. Cette tension est appliquée à l'entrée de l'inductance L.

Selon la Fig. 4, chaque driver DRIV comporte des moyens de déclenchement de mise sous tension CMP, lesdits moyens comportant un comparateur COMP1 et une source de courant C_S1. Ces moyens sont décrits plus en détail par la suite. On notera que les autres composants et fonctionnalités d'un driver DRIV sont connus de l'homme du métier et ne seront donc pas décrits dans la suite de l'exposé.

Le fonctionnement de dispositif de contrôle et de puissance MCP de l'alterno-démarreur AD s'effectue de la manière suivante :

**En mode repos :** lorsque le véhicule est à l'arrêt et que la clé de contact est ouverte (c'est-à-dire non tournée dans la serrure du commutateur d'allumage du réseau de bord du véhicule), le circuit de gestion C_MG est inactif et ne peut délivrer une tension d'alimentation ALG suffisante sur l'entrée correspondante L_ALG du driver DRIV1 pour faire fonctionner les transistors associés 11 et 12 de l'unité de puissance C_POS. En conséquence, les potentiels grille-source des transistors 11 et 12 sont à 0. Lesdits transistors sont tous les deux ouverts. Les entrées L_VD et L_VA sont toutes deux au niveau 0.

**En mode arrêt mais clef de contact fermée :** Lorsque le véhicule est à l'arrêt et que l'on tourne la clé de contact dans la serrure du commutateur d'allumage : cela entraîne la mise en route du circuit de gestion C_MG. Ledit circuit de gestion est alors actif.

**Ainsi, dans une première étape 1),** le circuit de gestion C_MG met en route le système d'alimentation BOOST qui délivre une tension ou potentiel d'alimentation ALG sur l'entrée d'alimentation L_ALG du driver DRIV1. Cette tension est incrémentale.

Le système d'alimentation BOOST fonctionne de la manière suivante :

**Lorsque le véhicule est en mode repos,** le transistor T est ouvert. Il n'y a aucune consommation. La tension batterie Ua est appliquée sur l'entrée de l'inductance L. Un courant i circule dans l'inductance L et la capacité C se charge progressivement. Lorsque celle dernière est chargée complètement, la tension d'alimentation ALG = Ua-Vd-VL avec VL, tension aux bornes de l'inductance = 0. Ainsi, il n'y a plus de courant i qui circule dans l'inductance L. On notera que la diode D a pour fonction, connue de l'homme du métier, d'éviter à la capacité de se décharger.

**Lorsque le véhicule est en fonctionnement,** clef contact tournée ou au démarrage, le circuit de gestion C_MG envoie un signal de commande (non représenté) au transistor T qui se ferme.

L'ouverture et la fermeture du transistor T sont réglées par un rapport cyclique Rc dépendant de la valeur du courant i dans l'inductance L, de la valeur de la tension d'alimentation ALG et de la valeur de l'inductance L. Selon ce rapport cyclique, il y a une phase de charge du courant i dans l'inductance L et une phase de décharge dans ladite inductance L.

Ainsi, tant que la tension d'alimentation ALG est inférieure à une valeur optimale de fonctionnement du driver DRIV, par exemple préférentiellement Ua+15V, le transistor T oscille, i.e. il s'ouvre et se ferme selon une période Tc du rapport cyclique Rc dépendante de la valeur de l'inductance L. La notion de rapport cyclique étant connu de l'homme du métier, elle ne sera pas décrite ici. Ainsi, la capacité C se charge à chaque fois que le transistor T s'ouvre, i.e. à chaque phase de décharge du courant i dans l'inductance L. La tension d'alimentation ALG s'incrémente ainsi progressivement au cours du temps jusqu'à la valeur optimale Ua+15V.

Selon le mode de réalisation présenté à la Fig. 3, la capacité C permet d'asservir la tension d'alimentation ALG sur la tension batterie Ua de manière linéaire. Ainsi, la capacité C étant rebouclée sur la masse, cela permet :

- d'éviter des problèmes de perturbations électromagnétiques que l'on aurait dans le cas d'un deuxième mode de réalisation où la capacité C serait rebouclée sur le potentiel Ua, et
- d'éviter à la tension d'alimentation ALG de suivre les fluctuations de la tension batterie Ua, i.e. quand la tension batterie augmente en fluctuant, la tension d'alimentation ALG augmente également mais sans fluctuations.

On notera que le deuxième mode de réalisation permet cependant un asservissement de la tension d'alimentation plus rapide par rapport à Ua, la capacité C étant connectée directement sur le potentiel Ua.

Dans un mode de réalisation non limitatif, le système d'alimentation BOOST comporte en outre :

- une boucle de contrôle de courant MG_I, et
- une boucle de contrôle de tension MG_U.

La boucle de contrôle de courant MG_I permet de contrôler si le courant i dans l'inductance L ne dépasse pas une valeur maximum Imax, par exemple égale à 1A.

Dans le cas contraire, on ouvre le transistor T de manière à éviter un échauffement dudit transistor T et un court-circuit de l'inductance L qui est à ce moment saturée.

La boucle de contrôle de tension MG_U permet de contrôler si la tension d'alimentation ALG ne dépasse pas une valeur maximum, en l'occurrence Ua + 15 Volts dans l'exemple pris, afin d'éviter un claquage des grilles des transistors du circuit de puissance C_POS.

**Dans une deuxième étape 2),** après la mise en route du système d'alimentation BOOST, le driver DRIV1 est amorcé afin de le rendre actif. Ce dernier est alors prêt à recevoir des ordres provenant du circuit de gestion C_MG.

L'amorçage qui correspond à une mise sous tension du driver DRIV1 s'effectue de la manière suivante :

Le comparateur COMP1 des moyens de déclenchement de mise sous tension CMP du driver DRIV1, représentés à la Fig. 4, comparent en permanence la tension d'alimentation ALG par rapport à une première tension de référence REF1. Selon le résultat de la comparaison, la source de courant C_S1 dudit driver DRIV1 est débloquée au moyen d'un signal de déblocage S0 envoyé par le comparateur COMP1 à ladite source de courant C_S1 comme indiqué à la Fig. 4.

Ainsi, si la tension d'alimentation ALG est inférieure à la première tension de référence REF1, ladite source de courant C_S1 est ouverte.

Dans le cas contraire, si elle est supérieure ou égale à ladite tension de référence REF1, ladite source de courant C_S1 est fermée sur le potentiel batterie Ua. Cela permet d'amorcer le driver DRIV1 et notamment de réveiller les alimentations ALIM dudit driver DRIV1 et par suite la logique interne LOGIC du driver DRIV1 qui fonctionne généralement à 5V et d'alimenter les transistors du circuit de puissance C_POS, la commande desdits transistors pouvant alors être effectuée.

Par ailleurs, dans un mode de réalisation préférentiel, mais non limitatif, le comparateur COMP1 possède une hystérésis, par exemple de 2V pour ne pas être sensible aux fluctuations en amplitude du potentiel d'alimentation ALG. Cette hystérésis permet de stabiliser la comparaison effectuée.

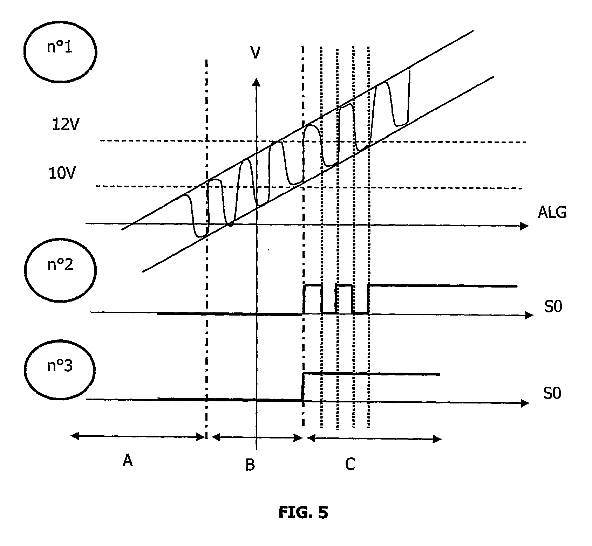

L'hystérésis est illustrée à la Fig. 5 et s'applique de la manière suivante : Si la tension d'alimentation ALG est supérieure ou égale à REF1 = Ua+12V, le signal de déblocage S0 est positionné à un niveau haut, la source de courant C_S1 est fermée ou commutée et le driver DRIV1 est actif.

Comme on peut le voir sur la Fig. 5, la tension d'alimentation ALG n'est pas un signal pur, elle comporte donc des fluctuations. Lesdites fluctuations peuvent donc entraîner une fluctuation du signal de déblocage S0 et par suite une instabilité dans la commutation de ladite source de courant C_S1, comme on peut le voir sur la Fig. dans la plage C représentée et le graphe n°2.

Afin de résoudre ce problème, dès que la tension d'alimentation ALG atteint Ua+12V, l'hystérésis abaisse la première tension de référence REF1 à Ua+10V.

Ainsi, malgré les fluctuations de la tension d'alimentation ALG, le signal de déblocage S0 demeure stable ainsi que la commutation de ladite source de courant ALIM comme on peut le voir sur le graphe n°3. De plus, cela évite aux composants du comparateur COMP1 un claquage par échauffement. En effet, sans hystérésis, si la tension d'alimentation ALG augmente lentement, lesdits composants fonctionnent en mode linéaire dans une plage avoisinant la tension seuil de 12V du comparateur COMP1 créant un échauffement et une instabilité au niveau du signal de déblocage S0.

Ainsi, avec l'hystérésis, on a la logique suivante :

• Si la source de courant C_S1 n'a pas encore commuté :

    - Si la tension d'alimentation ALG est inférieure à REF1 = Ua+12V, ladite source de courant C_S1 est ouverte et le driver DRIV est inactif, on se trouve dans les plages A et B de la Fig.5,

    - Si la tension d'alimentation ALG est supérieure à REF1 = Ua+12V, ladite source de courant C_S1 commute et le driver DRIV est actif, on se trouve dans la plage C de la Fig.5.

• Si la source de courant C_S1 est commutée :

    - Si la tension d'alimentation ALG reste supérieure à REF1 = Ua+10V, ladite source de courant C_S1 demeure commutée et le driver DRIV demeure actif, on se retrouve dans les plages B et C de la Fig.5,

    - Si la tension d'alimentation ALG redevient inférieure à REF11 = Ua+10V, ladite source de courant C_S1 s'ouvre et le driver DRIV redevient inactif, on se retrouve dans la plage A de la Fig.5.

Ainsi, dans la plage Ua+10V et Ua+12V, le driver DRIV est amorcé ou non selon l'état antérieur de commutation de la source de courant C_S1.

L'avantage est qu'il n'y a aucune consommation d'énergie de la part du driver DRIV1 lorsqu'il n'est pas amorcé car un tel driver ne comporte que des composants tels que des transistors, comme on le verra en détail plus loin, qui ne consomment pas car ils sont ouverts à ce moment.

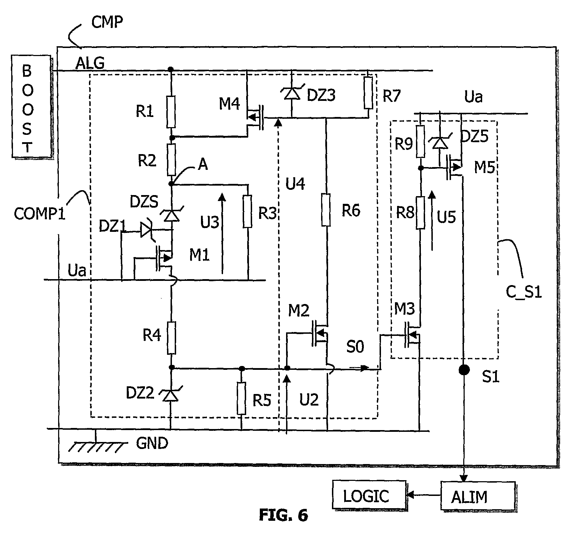

Sur la Fig. 6 est représenté un mode de réalisation préférentiel non limitatif des moyens de mise sous tension CMP et notamment du comparateur COMP1 et de la source de courant C_S1. Lesdits moyens de mise sous tension CMP comporte notamment une pluralité de transistors de puissance de type MOS.

Le comparateur COMP1 comprend :

- une diode zener de seuil DZS, et
- un premier transistor M1

La fonction hystérésis du comparateur COMP1 est effectuée au moyen de :

- deuxième et quatrième transistors M2 et M4, le deuxième transistor M2 étant destiné à fermer ou ouvrir le quatrième transistor M4, et
- d'un point diviseur comportant une première, deuxième et troisième résistances R1, R2 et R3.

On a les relations suivantes :

$$- \quad U3 = \frac{R3}{R1 + R2 + R3} * (ALG-Ua) \ [1],$$

étant la tension aux bornes de la troisième résistance R3.
- U2 est la tension grille du deuxième et troisième transistors M2, M3,
- U4 est la tension grille du quatrième transistor M4.

La source de courant C_S1 comporte :

- un troisième M3 destiné à activer les alimentations ALIM du driver DRIV décrites dans la suite de l'exposé, et
- un cinquième transistor M5 qui a pour fonction d'éviter une consommation d'énergie dans les alimentations ALIM du driver DRIV quand ledit driver n'est pas réveillé, U5 étant la tension grille du cinquième transistor M5.

Par ailleurs, le comparateur COMP1 comportent en outre :

- une cinquième résistance R5, appelée en anglais « pull-down », qui a pour fonction de fixer le potentiel des grilles des deuxième et troisième transistors M2 et M3 à la masse quand le premier transistor M1 est ouvert,
- une septième résistance R7, appelée en anglais « pull-up », qui a pour fonction de fixer le potentiel de la grille du quatrième transistor M4 à la tension d'alimentation ALG quand le deuxième transistor M2 est ouvert, et
- une neuvième résistance R9, appelée en anglais « pull-up », qui a pour fonction de fixer le potentiel de la grille du cinquième transistor M5 à la tension batterie Ua quand le troisième transistor M3 est ouvert.

On notera que le potentiel d'alimentation ALG est appliqué au quatrième transistor M4 et à la première R1 et septième résistance R7, et la tension batterie Ua est appliquée préférentiellement au cinquième transistor M5. Le potentiel d'alimentation ALG peut également être appliqué audit cinquième transistor M5 à la place de la tension batterie Ua.

Dans un mode de réalisation préférentiel non limitatif, le premier transistor M1, le quatrième transistor M4 et le cinquième transistor M5 sont des transistors de type PMOS, tandis que les autres transistors sont des transistors de type NMOS. Le fonctionnement de tels transistors ne sera pas décrit car il est bien connu de l'homme du métier. On rappellera simplement que pour qu'un transistor NMOS soit fermé, il faut que sa tension grille soit supérieure à sa tension source tandis que pour un transistor PMOS, il faut que sa tension grille soit inférieure à sa tension source.

Préférentiellement, à chaque transistor de puissance MOS, sont associés des moyens de protection de grille, soit par exemple une diode zener DZ ayant pour fonction de protéger chaque transistor M de sorte que sa tension grille-source ne dépasse pas les 15V, tension optimale de fonctionnement des transistors MOS. Ceci évite à un transistor M de saturer et donc de griller en cas de dépassement de ladite tension. On notera sur la Fig. 6, que la deuxième diode zener DZ2 est associée au deuxième M2 et au troisième transistor M3.

De plus, préférentiellement, à chaque diode zener DZ sont associés des moyens de limitation en courant lorsque le premier transistor M1 devient très passant, i. e. dans le cas où la tension d'alimentation ALG est supérieure à Ua+15V. Ceci évite auxdites diodes de griller. Dans un mode de réalisation non limitatif, lesdits moyens de limitation de courant comportent une résistance. Ainsi, à la deuxième diode zener DZ2 est associée une quatrième résistance R4. Les résistances associées à la troisième diode zener DZ3 et à la cinquième diode zener DZ5 sont la sixième R6 et la huitième résistances R8 respectivement. Ainsi la quatrième R4, sixième R6 et huitième résistances R8 ont pour fonction la limitation de courant dans les diodes zener associées respectivement DZ2, DZ3 et DZ5. On notera que la deuxième résistance R2 sert également à limiter le courant dans la deuxième diode zener DZ2.

Dans un exemple non limitatif, les valeurs des composants cités sont les suivantes :

- Pour le pont diviseur R1, R2, R3 : 2kΩ, 6kΩ, 4kΩ respectivement
- Pour les moyens de limitation de courant : (R4, R5), (R6, R7), (R8, R9) = (10kΩ, 50kΩ)
- Pour les diodes zener DZ2, DZ3 et DZ5 utilisées comme moyen de protection : tension seuil de 15V
- Pour la diode zener de seuil DZS : tension seuil Vsdzs de 3V préférentiellement.

On notera que bien évidemment, d'autres valeurs peuvent être utilisées, en particulier pour le pont diviseur, la seule contrainte étant de pouvoir effectuer l'hystérésis à 2V dans l'exemple pris avec des tensions de 10 et 12V.

Ci-après est décrit plus en détail le mode de fonctionnement des moyens de déclenchement de mise sous tension CMP, selon le mode de réalisation illustré à la Fig. 6.

En mode repos, lorsque la source de courant C_81 n'a pas encore commuté, la tension d'alimentation ALG est inférieure à Ua-Vd =13,5-0,6V=12,9V environ. On notera que lorsque la batterie est à vide, sa tension est d'environ 13,5V au lieu de 14V (batterie chargée) comme indiqué précédemment.

Le premier transistor M1 est ouvert car la tension grille (Ua-Vd) est supérieure à sa tension source (ALG).

Le deuxième et troisième transistors M2 et M3 sont ouverts également car leur tension grille (U2) est égale à leur tension source qui est au potentiel masse.

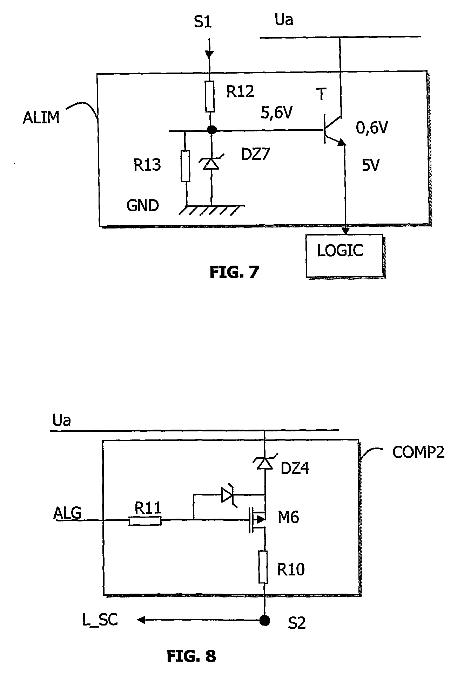

Le quatrième transistor M4 est ouvert car sa tension grille est égale à sa tension source = ALG (il n'y a pas de courant i dans la septième résistance R7). Le cinquième transistor M5 est également ouvert car sa tension grille est égale à sa tension source (Ua) (ou éventuellement à la tension d'alimentation ALG). Le signal d'activation S1 se retrouve donc à la masse GND via les alimentations ALIM, en particulier via la douzième R12 et treizième résistances R13 de la Fig. 7. La tension d'alimentation ALG « transite » donc par le chemin suivant : R1-R2-R3.

On notera que l'ensemble des transistors M étant ouverts, il n'y a aucune consommation d'énergie contrairement à un système de comparateurs contenant des amplificateurs opérationnels ou de comparateurs nécessitant une consommation permanente par exemple. De plus, on notera que les moyens de déclenchement de mise sous tension CMP n'ont pas besoin d'une grande précision, grande précision au centième de volts près par exemple. Ainsi, il n'est pas nécessaire d'avoir recours à des amplificateurs opérationnels.

Par ailleurs, on remarquera que sans l'existence du deuxième transistor M2 et de la sixième résistance R6, le quatrième transistor M4 serait toujours ouvert. En effet, dans ce cas, la tension grille U4 du quatrième transistor M4 serait toujours égale à la tension d'alimentation ALG et donc toujours égale à sa tension source (= ALG). Donc la tension grille-source serait toujours égale à 0.

**En mode de fonctionnement** (clef de contact tournée ou au démarrage), la tension d'alimentation ALG augmente,

à ce moment la tension d'alimentation ALG devient supérieure à la Ua-Vd. Par conséquent, la tension source du premier transistor M1 devient supérieure à sa tension grille et ledit premier transistor M1 se ferme. Plus précisément, le premier transistor M1 se ferme quand il existe une différence de 1V environ entre sa tension grille et sa tension source.

Cependant, la diode de seuil DZS n'est pas encore passante car sa tension seuil de 3V n'a pas encore été atteinte.

Ce n'est que lorsque la tension d'alimentation ALG devient supérieure à Ua +12V = 13,5+12V = 24,9V environ, que la diode de seuil DZS de tension seuil Vdszs 3V devient passante. En effet, le potentiel au point A = U3 devient supérieur à 4V (la tension U3 augmentant également selon la relation [1] précédente). A ce moment, la tension d'alimentation ALG transite par le chemin : R1-R2-DZS-M1.

Le fait que la diode de seuil DZS soit passante entraîne une augmentation de la tension grille du deuxième transistor M2 (U2) et du troisième transistor M3 (U2) par rapport à leur tension source (la masse). Par conséquent, lesdits transistors M2 et M3 se ferment.

Les fermetures du deuxième transistor M2 et du troisième transistor M3 entraînent celles du quatrième transistor M4 et cinquième transistors M5 respectivement.

En effet, en ce qui concerne le quatrième transistor M4, lorsque le deuxième transistor M2 se ferme, du courant i transite par la septième résistance R7 de sorte que la tension à ses bornes $U_{R7}$ > 1V. A ce moment, la tension grille U4 du quatrième transistor M4 est inférieure à sa tension source (= ALG). On a une tension grille-source d'environ 1V.

Par ailleurs, en ce qui concerne le cinquième transistor M5, lorsque le troisième transistor M3 se ferme, du courant transite par la neuvième résistance R9. A ce moment, la tension grille U5 aux bornes du cinquième transistor M5 est inférieure à sa tension source (= Ua).

Ainsi, lorsque le quatrième transistor M4 se ferme, la première résistance R1 est court-circuitée et le rapport du pont diviseur est changé. On obtient la relation :

$$U3 = \frac{R3}{R2+R3} * (ALG-Ua)$$

Ledit pont ne comporte plus que les deuxième et troisième résistances R2, R3, sa valeur ne correspondant ainsi plus qu'à 10V. La tension d'alimentation ALG transite maintenant par le chemin M4-R2-M1-R4.

Le nouveau potentiel de Ua+10V est donc le nouveau potentiel pour rendre le premier transistor M1 passant ou non et la source de courant C_S1 ouverte ou fermée comme nous l'avons vu précédemment.

De plus, lorsque le cinquième transistor M5 se ferme, le signal d'activation S1 est positionné au niveau tension batterie Ua (ou éventuellement au niveau tension d'alimentation ALG) et est envoyé aux alimentations ALIM du driver DRIV1. Lesdites alimentations ALIM permet de transformer la tension batterie Ua en une tension de fonctionnement pour la logique LOGIC du driver DRIV1 qui est en général de 5V.

Ainsi, lesdites alimentations ALIM du driver DRIV1 sont activées et par suite la logique LOGIC du driver est réveillée, et le circuit de puissance C_POS est mise en route, la commande desdits transistors peut ainsi s'effectuer.

Dans un mode de réalisation non limitatif illustré à la Fig.7, les alimentations ALIM comportent :

- une douzième résistance R12, de 3kΩ par exemple, reliée au cinquième transistor M5, afin de réduire la tension batterie Ua à une tension de 5,6V,
- une septième diode zener DZ7, de tension seuil de 5,6V reliée à la masse et à ladite résistance douzième R12,
- un transistor T, de tension de jonction de 0,6V relié au potentiel batterie Ua, à la logique du driver DRIV1 et situé entre la douzième résistance R12 et la septième diode zener DZ7, et
- une treizième résistance R13 qui a pour fonction une mise à la masse du transistor T lorsque le cinquième transistor M5 de la source de courant C_S1 est ouvert.

Ainsi, selon l'invention qui a été décrite précédemment, des moyens de connexions uniques ou entrée d'alimentation L_ALG sont utilisés pour mettre sous tension les drivers DRIV et transmettre un potentiel transitant entre le circuit de gestion C_MG et lesdits drivers DRIV, en l'occurrence le potentiel permettant de charger les grilles des transistors de puissance MOS. De ce fait, on n'utilise plus deux fils de connexions pour envoyer un signal de mise sous tension et un potentiel respectivement. On gagne ainsi de la place dans le dispositif de contrôle et de puissance MCP. En conséquence, ce dernier pourra être intégré plus facilement dans le boîtier de l'alterno-démarreur.

Cependant, il peut arriver que cette entrée d'alimentation L_ALG soit défectueuse. Afin de détecter une rupture de liaison sur ladite entrée L_ALG, dans un mode de réalisation préférentiel non limitatif, les moyens de déclenchement de mise sous tension CMP comportent en outre des moyens de détection de rupture de liaison COMP2 illustrés à la Fig.4. Ces moyens COMP2 détectent ainsi si l'entrée L_ALG est en bon état de fonctionnement.

Si elle n'est pas en bon état de fonctionnement, cela peut entraîner par exemple un disfonctionnement dans la branche B associée du circuit de puissance C_POS, les transistors de ladite branche restant ouverts.

La Fig.8 présente un mode de réalisation préférentiel non limitatif desdits moyens de détection de rupture COMP2.

Lesdits moyens COMP2 comprennent :

- un sixième transistor de puissance M6,
- une dixième et onzième résistances R10 et R11, et
- une quatrième diode zener DZ4.

La onzième résistance R11 a pour fonction de limiter le courant quand la tension d'alimentation ALG est proche de zéro.

La dixième résistance R10 a pour fonction de permettre de positionner l'information de rupture de liaison S2 à un niveau de 5V par exemple.

La quatrième diode zener DZ4 a pour fonction de fournir une deuxième valeur de référence REF2.

Dans un exemple non limitatif, les valeurs de ces composants sont les suivantes :

- Pour la onzième résistance R11 : 20kΩ,
- Pour la dixième résistance R10 : 10 kΩ,
- Pour la quatrième diode zener DZ4 : tension seuil de 5V

Les moyens de détection de rupture COMP2 fonctionnent de la manière suivante :

Les moyens de détection de rupture COMP2 comparent la tension d'alimentation ALG se situant sur l'entrée d'alimentation L_ALG à une deuxième tension de référence REF2. Selon le résultat de la comparaison, lesdits moyens de détection de rupture COMP2 envoie une information de rupture de liaison S2 audit circuit de contrôle C_MG.

Préférentiellement la deuxième référence REF2 est égale à : Ua - Vd - Vm avec Vd la tension de jonction aux bornes de la diode D du système d'alimentation BOOST et Vm étant une tension de marge.

Préférentiellement, la tension de marge Vm est égale à 2V. Les 2 volts permettent ainsi d'avoir une certaine marge de test par rapport au fonctionnement normal de l'entrée d'alimentation L_ALG, le fonctionnement normal étant lorsque la tension d'alimentation ALG est égale ou supérieure à Ua -Vd.

Ainsi, si la liaison L_ALG n'est pas défectueuse, le potentiel d'alimentation ALG aux bornes des moyens de connexion L_ALG est maintenue à une tension égale à Ua-Vd et le sixième transistor M6 reste ouvert. Il n'y a aucune consommation de la part des moyens de détection de rupture de liaison COMP2.

Par contre, si la liaison L_ALG est défectueuse, i.e, si le potentiel d'alimentation ALG est inférieur à la deuxième tension de référence REF2, alors le sixième transistor M6 se ferme. A ce moment, l'information de rupture S2 est envoyée au circuit de gestion C_MG par l'entrée capteur L_SC.

On notera qu'en général, lorsque la liaison L_ALG est défectueuse, le potentiel d'alimentation ALG se met rapidement à la masse. Aussi, la période transitoire se situant entre les tensions Ua-Vd et Ua-Vd-Vm ne dure que quelques millisecondes.

Le circuit de gestion C_MG applique alors une stratégie suite à ce défaut de rupture de liaison. Cette stratégie peut, par exemple, consister à réduire certains consommateurs de véhicule tels que la climatisation ou le systèmes audios afin de consommer moins d'énergie, ou à ne pas démarrer le véhicule.

Les moyens de détection de rupture COMP2 sont activés selon le schéma suivant ;

**Quand le véhicule est à l'arrêt,** dès que le circuit de gestion C_MG est actif et avant le démarrage, ledit circuit de gestion comporte une étape d'activation des moyens de détection de rupture COMP2 et de test du signal transitant sur l'entrée capteur L_SC.

On notera qu'à l'arrêt, le signal transitant sur l'entrée capteur L_SC est toujours à zéro. Ainsi, si le signal est égal à 0, il n'y a pas défaut sur l'entrée d'alimentation L_ALG. Par contre, si le signal est égal à 5V, cela correspond au signal de rupture de liaison S2 et on peut déduire la présence d'un défaut sur l'entrée d'alimentation L_ALG.

De la même façon, **en mode alternateur,** le circuit de gestion C_MG est actif et comporte une étape d'activation des moyens de détection de rupture COMP2 et de test du signal transitant sur l'entrée capteur L_SC. On notera qu'en mode alternateur, le signal transitant sur l'entrée capteur L_SC est également normalement toujours à zéro.

On notera également, qu'en mode alternateur, dans le cas d'un défaut de liaison, la tension d'alimentation ALG est à la masse et les drivers DRIV s'arrêtent de fonctionner, les transistors desdits drivers ayant leur grille-source en court-circuit. Cependant, les transistors des drivers DRIV comportent des diodes parasites qui effectuent un redressement synchrone. Ainsi, l'alterno-démarreur fonctionne quand même mais dans un mode dégradé. Le circuit de gestion C_MG peut ainsi appliquer une stratégie telle que moins consommer.

**Dans une quatrième étape 4),** après la mise sous tension du driver DRIV1, ledit driver DRIV1 vérifie dans quel mode se trouve l'alterno-démarreur selon les informations de validation VA et VD.

Par exemple, lorsque le mode alternateur est sélectionné, l'entrée de validation L_VA reçoit un signal logique à 1 et l'entrée de validation L_VD un signal à 0, et inversement lorsque le mode démarreur est sélectionné. Le niveau logique 1 est, par exemple, une tension de 5 volts et le niveau logique 0 une tension nulle.

Lorsque l'alterno-démarreur se trouve en mode démarreur, le driver reçoit les signaux capteurs SC provenant des capteurs de position du rotor. Les grilles des transistors 11 et 12 sont commandées en fonction des signaux reçus sur l'entrée capteur L_SC.

Lorsque l'alterno-démarreur se trouve en mode alternateur, les transistors de puissance 11 et 12 fonctionnent en redressement synchrone, c'est-à-dire que des comparateurs (non représentés) détectent le niveau de phase PH sur l'entrée phase MPH, par rapport au potentiel de masse GND sur l'entrée MGND et au potentiel de sortie Ua sur l'entrée Mua. Le résultat de cette comparaison est appliqué aux grilles des transistors 11 et 12.

La commande des transistors de l'unité de puissance C_POS ne sera pas décrite en détail car elle fait partie des connaissances de l'homme du métier.

Ainsi, en mode démarreur, les moyens de détection de rupture COMP2 sont inactifs car l'entrée/sortie L_SC est prise pour actionner les transistors MOS via les drivers DRIV. Par contre, s'il y a un défaut, (coupure de la liaison L_ALG), les MOS restent ouverts et le véhicule ne démarre pas.

En mode alternateur, l'entrée/sortie L_SC est libérée et la détection de défaut peut fonctionner. Cette détection permet de ne pas rester en mode de redressement à diodes, comme décrit précédemment, qui provoque un échauffement important des MOS. La détection par les moyens de détection COMP2 permet de transmettre immédiatement l'information de défaut (rupture de liaison L_ALG) et permet au circuit de gestion C_MG de réaliser la stratégie de repli, en accord avec l'architecture générale du véhicule comme décrit plus haut.

## Revendications

1. Dispositif de contrôle et de puissance (MCP) pour une machine électrique tournante comportant un circuit de gestion (C_MG), un circuit de puissance (C_POS), ledit circuit de puissance comportant une pluralité de transistors de puissance (MOS), et des circuits de pilotage (DRIV) associés auxdits transistors de puissance (MOS), et comportant des moyens de connexion (L_ALG) entre ledit circuit de gestion (C_MG) et lesdits circuits de pilotage (DRIV) destinés à assurer une mise sous tension desdits circuits de pilotage (DRIV) et à transmettre au moins un potentiel (ALG) transitant entre ledit circuit de gestion (C_MG) et lesdits circuits de pilotage (DRIV, **caractérisé en ce que** au moins un circuit de pilotage (DRIV) comporte en outre des moyens de détection (COMP2) de rupture desdits moyens de connexion (L_ALG) et lesdits moyens de détection (COMP2) sont destinés à transmettre une information de rupture de liaison (S2) audit circuit de gestion (C_MG).

2. Dispositif de contrôle et de puissance selon la revendication 1, *caractérisé en ce que* ledit au moins potentiel est une tension d'alimentation (ALG) destinée à alimenter lesdits transistors de puissance (MOS).

3. Dispositif de contrôle et de puissance selon l'une des revendications 1 ou 2, *caractérisé en ce qu'*un circuit de pilotage (DRIV) comporte des moyens propres de déclenchement de la mise sous tension (CMP).

4. Dispositif de contrôle et de puissance selon la revendication 3 *caractérisé en ce que* lesdits moyens de déclenchement de mise sous tension (CMP) sont destinés à effectuer un déclenchement en fonction dudit potentiel (ALG).

5. Dispositif de contrôle et de puissance selon l'une des revendications 3 ou 4 *caractérisé en ce que* les moyens de déclenchement de mise sous tension (CMP) comportent un comparateur (COMP1) destiné à comparer ledit au moins potentiel (ALG) par rapport à une première tension de référence (REF1).

6. Dispositif de contrôle et de puissance selon la revendication 5 *caractérisé en ce que* le comparateur (COMP1) comporte une hystérésis pour déterminer la première tension de référence (REF1).

7. Dispositif de contrôle et de puissance selon l'une des revendications 5 ou 6 *caractérisé en ce que* le comparateur (COMP1), selon le résultat de ladite comparaison avec la première tension de référence (REF1), est destiné à envoyer un signal de déblocage (S0) de manière à amorcer ledit circuit de pilotage (DRIV).

8. Dispositif de contrôle et de puissance selon la revendication 7 *caractérisé en ce que* les moyens de déclenchement de mise sous tension comporte en outre une source de courant (C_S1) destinée à recevoir ledit signal de déblocage (S0) et à envoyer un signal d'activation (S1) audit circuit de pilotage (DRIV) de manière l'amorcer.

## Patentansprüche

1. Vorrichtung zur Steuerung und Stromversorgung (MCP) für eine rotierende elektrische Maschine, umfassend eine Steuerschaltung (C_MG), eine Stromversorgungsschaltung (C_POS), wobei die Stromversorgungsschaltung mehrere Leistungstransistoren (MOS) umfasst, und Treiberschaltungen (DRIV), die den Leistungstransistoren (MOS) zugeordnet sind, und umfassend Anschlussmittel (L_ALG) zwischen der Steuerschaltung (C_MG) und den Treiberschaltungen (DRIV), die dazu bestimmt sind, sicherzustellen, dass die Treiberschaltungen (DRIV) unter Spannung gesetzt werden, und mindestens ein Potential (ALG), das zwischen der Steuerschaltung (C_MG) und den Treiberschaltungen (DRIV) hindurchgeht, zu übertragen, **dadurch gekennzeichnet, dass** mindestens eine Treiberschaltung (DRIV) außerdem Mittel (COMP2) zur Detektion eines Bruchs der Anschlussmittel (L_ALG) umfasst, und die Detektionsmittel (COMP2) dazu bestimmt sind, eine Information über einen Bruch der Verbindung (S2) an die Steuerschaltung (C_MG) zu senden.

2. Steuer- und Stromversorgungsvorrichtung nach Anspruch 1, **dadurch gekennzeichnet, dass** das mindestens eine Potential eine Speisespannung (ALG) ist, die dazu bestimmt ist, die Leistungstransistoren (MOS) zu speisen.

3. Steuer- und Stromversorgungsvorrichtung nach einem der Ansprüche 1 oder 2, **dadurch gekennzeichnet, dass** eine Treiberschaltung (DRIV) Mittel umfasst, die für ein Auslösen des Unterspannungsetzens (CMP) geeignet sind.

4. Steuer- und Stromversorgungsvorrichtung nach Anspruch 3, **dadurch gekennzeichnet, dass** die Mittel zum Auslösen des Unterspannungsetzens (CMP) dazu bestimmt sind, ein Auslösen entsprechend dem Potential (ALG) zu bewirken.

5. Steuer- und Stromversorgungsvorrichtung nach einem der Ansprüche 3 oder 4, **dadurch gekennzeichnet, dass** die Mittel zum Auslösen des Unterspannungsetzens (CMP) einen Komparator (COMP1) umfassen, der dazu bestimmt ist, das mindestens eine Potential (ALG) mit einer ersten Referenzspannung (REF1) zu vergleichen.

6. Steuer- und Stromversorgungsvorrichtung nach Anspruch 5, **dadurch gekennzeichnet, dass** der Komparator (COMP1) eine Hysterese umfasst, um die erste Referenzspannung (REF1) zu bestimmen.

7. Steuer- und Stromversorgungsvorrichtung nach einem der Ansprüche 5 oder 6, **dadurch gekennzeichnet, dass** der Komparator (COMP1) dazu bestimmt ist, gemäß dem Ergebnis des Vergleichs mit der ersten Referenzspannung (REF1) ein Freigabesignal (S0) zu senden, um die Treiberschaltung (DRIV) zu initiieren.

8. Steuer- und Stromversorgungsvorrichtung nach Anspruch 7, **dadurch gekennzeichnet, dass** die Mittel zum Auslösen des Unterspannungsetzens außerdem eine Stromquelle (C_S1) umfassen, die dazu bestimmt ist, das Freigabesignal (S0) zu empfangen und ein Aktivierungssignal (S1) an die Treiberschaltung (DRIV) zu senden, um diese zu initiieren.

**Claims**

1. Control and power device (MCP) for a rotating electrical machine comprising a management circuit (C_MG), a power circuit (C_POS), said power circuit comprising a plurality of power transistors (MOS) and driving circuits (DRIV) associated with said power transistors (MOS) and comprising connection means (L_ALG) between said management circuit (C_MG) and said driving circuits (DRIV) intended to ensure a powering-up of said driving circuits (DRIV) and to transmit at least one potential (ALG) passing between said management circuit (C_MG) and said driving circuits (DRIV), **characterized in that** at least one driving circuit (DRIV) further comprises means (COMP2) for detecting a breaking of said connection means (L_ALG) and said detection means (COMP2) are intended to transmit a link break information item (S2) to said management circuit (C_MG).

2. Control and power device according to Claim 1, **characterized in that** said at least one potential is a power supply voltage (ALG) intended to power said power transistors (MOS).

3. Control and power device according to one of Claims 1 or 2, **characterized in that** a driving circuit (DRIV) comprises means specifically for triggering the powering-up (CMP).

4. Control and power device according to Claim 3, **characterized in that** said power-up triggering means (CMP) are intended to perform a triggering according to said potential (ALG).

5. Control and power device according to one of Claims 3 or 4, **characterized in that** the power-up triggering means (CMP) comprise a comparator (COMP1) intended to compare said at least one potential (ALG) relative to a first reference voltage (REF1).

6. Control and power device according to Claim 5, **characterized in that** the comparator (COMP1) comprises a hysteresis for determining the first reference voltage (REF1).

7. Control and power device according to one of Claims 5 or 6, **characterized in that** the comparator (COMP1), depending on the result of said comparison with the first reference voltage (REF1), is intended to send an unblocking signal (S0) so as to prime said driving circuit (DRIV).

8. Control and power device according to Claim 7, **characterized in that** the power-up triggering means further comprise a current source (C_S1) intended to receive said unblocking signal (S0) and to send an activation signal (S1) to said driving circuit (DRIV) so as to prime it.

**FIG. 1**

**FIG. 2**

**FIG. 3**

**FIG. 4**

**FIG. 5**

**FIG. 6**

**FIG. 7**

**FIG. 8**

**EP 1 779 505 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0911958 A1

- FR 2842041 A